# EUROPÄISCHE PATENTSCHRIFT

(11) **EP 2 465 639 B1**
(45) Veröffentlichungstag und Bekanntmachung des Hinweises auf die Patenterteilung: **02.03.2016**
(21) Anmeldenummer: 11193719.9
(22) Anmeldetag: 15.12.2011
(51) Int. Cl.: B23Q 17/09, B23Q 17/00, G05B 19/4063

(54) **Werkzeugmaschine**
A machine tool
Machine-outil

(30) Priorität: 17.12.2010 DE 102010054855
(43) Veröffentlichungstag der Anmeldung: 20.06.2012
(73) Patentinhaber: DECKEL MAHO Pfronten GmbH, 87459 Pfronten (DE)
(72) Erfinder: Bornemann, Armin, 87616 Marktoberdorf (DE); Seitz, Reinhold, 87659 Hopferau (DE); Gronbach, Hans, 87637 Eisenberg (DE); Pruschek, Peter, 87459 Pfronten (DE)
(74) Vertreter: Beetz & Partner mbB

(56) Entgegenhaltungen:
- EP-A1- 0 505 569
- DE-A1- 10 228 389
- DE-U1-202009 009 390
- US-A- 5 062 743
- US-A- 5 070 655
- US-A- 5 152 327
- US-A1- 2003 182 014

## Beschreibung

Die Erfindung betrifft eine programmgesteuerte Fräs- und Bohrmaschine, mit einer in mehreren Koordinatenachsen motorisch verfahrbaren Bearbeitungseinheit, in der eine Arbeitsspindel zur auswechselbaren Aufnahme eines Spanwerkzeugs sowie ein E-Motor als Drehantrieb der Arbeitsspindel eingebaut sind, mit einer programmierbaren Steuereinheit und mit einer Einrichtung zur Überwachung von Betriebszuständen der Werkzeugmaschine.

Aus der US 2003/182014 A1 ist eine Einreichung zur gleichzeitigen Überwachung eines Betriebszustandes mehrerer Produktionsmaschinen bekannt. Jede dieser Maschinen in der Prozesslinie enthält mehrere spezielle Werkzeuge zum Schneiden, Bohren, Abdrehen oder Polieren eines Werkstücks. Um den Grad des Veschleißes der Spanwerkzeuge bestimmten zu können, werden die Spanoperationen jedes Werkzeugs erfasst und für jede überwachte Maschine in einem gesonderten Zähler gezählt. Ein Prozessor vergleicht die Zählerergebnisse mit vorgegebenen Werten, welche die Lebensdauer des jeweiligen Spanwerkzeugs kennzeichnen. Die Vergleichsergebnisse werden in einem Mehrfarben-Display angezeigt und ermöglichen durch geeignete Farbgebund dem Bediener eine Abschätzung des Verschleißzustandes des jeweils im Betrieb befindlichen Werkzeugs. Das Mehrfarben-Display ist integrierter Bestandteil der Anzeigeneinrichtung.

Daneben ist in der US 5,152,327 eine für den Einsatz in Holzbearbeitungsmaschinen konzipierte Warnvorrichtung beschrieben, die bei einem sog. Nachlauf einer Arbeitsspindel bzw. eines Werkzeugs ein optisches Warnsignal abgibt. Die beschriebene und dargestellte Maschine enthält mehrere Bearbeitungseinheiten mit je einer motorgetriebenen Arbeitsspindel, die nebeneinander gemeinsam an einem horizontal in Y-Richtung verfahrbaren Schlitten montiert sind. Die Arbeitsspindeln in dieser Reihe von Bearbeitungseinheiten können einzeln in der vertikalen Z-Achse verfahren werden. Jede Bearbeitungseinheit besitzt als optische Anzeige eine Warnlampe, die an einer Stirnseite einer oberen Verlängerung der Haube des jeweiligen Spindelmotors montiert ist. Alle Warnlampen und Spindelmotoren sind an eine Programmsteuerung angeschlossen, welche einzelne dieser Warnlampen einschaltet, wenn in die jeweils zugeordnete Arbeitsspindel nach Abschalten ihres Spindelmotors durch Wirkung ihrer Masseträgheit weiterläuft. Nach einer einstellbaren Zeitspanne erfolgt das Abschalten der Warnlampe. Die Verwendung von mehrfarbigen Warnlampen, die durch unterschiedliche Farbgebung bestimmte Betriebszustände anzeigen könnten, ist bei dieser bekannten Warnvorrichtung weder vorgesehen noch technisch sinnvoll.

Bei modernen programmgesteuerten Werkzeugmaschinen und Bearbeitungszentren kommt dem Einrichten der Maschine vor der Bearbeitung eines bestimmten Werkstücks bzw. einer Werkstückserie eine erhebliche Bedeutung zur Erzielung von ungestörten Arbeitsabläufen unter optimierten Bedingungen zu. Daneben ist auch eine kontinuierliche Überwachung der Betriebszustände während des Arbeitsbetriebs der Maschine wesentlich, um mögliche Störfaktoren bereits in einem frühen Entwicklungsstadium zu erkennen und rechtzeitig Gegenmaßnahmen einleiten zu können. Das Einrichten der Maschine vor Beginn der Arbeiten und auch deren Zustandsüberwachung während des Betriebes erfolgt bisher ausschließlich über das Steuerpult der Steuereinheit, das sich in der Regel auf einem begrenzt bewegbaren Ständer neben oder schräg vor der Maschine befindet. Somit muss der Bediener beim Einfahren der Bearbeitung die Anzeigen der relevanten Betriebsparameter auf dem Steuerpult beobachten und möglichst gleichzeitig auch die tatsächliche Arbeitsweise des Werkzeuges - im simultanen o des Kühlschmierstoffs verwendet werden. Da die Auswerteeinheit einerseits mit der Sensorik und andererseits mit der Steuereinheit verbunden ist, können Daten aus der Steuereinheit und Messdaten aus der Sensorik miteinaner verknüpft und verarbeitet werden, um Daten für den jeweiligen Betriebszustand der Maschine zu erhalten. Eine intensive und ermüdungsarme Anzeige wird dadurch erzielt, dass das optische Anzeigeelement im direkten Sichtbereich des Bedieners an einem Maschinenteil angeordnet ist, wobei die Anzeige auf der Grundlage der von der Auswerteeinheit ausgegebenen Daten einen normalen, einen kritischen, und einen gefährlichen Betriebszustand der Maschine anzeigt.

Die erfindungsgemäße Überwachungseinrichtung bietet u.a. den Vorteil, dass ein Bediener normale und auch kritische Betriebszustände einer Werkzeugmaschine frühzeitig und auf einfache Weise erkennen kann, und zwar durch die für ihn primäre Beobachtung der vorzugsweise im Arbeitsbereich der Maschine angeordneten optischen Anzeige. Ein Beobachtungswechsel zwischen dem Display auf dem Steuerpult und dem Arbeitsbereich des Werkzeugs ist nicht mehr erforderlich. Die Anzeige der jeweiligen Betriebszustände in unterschiedlichen Farben fördert die Langzeit-Aufmerksamkeit des Bedieners, insbesondere bei einem plötzlichen Farbwechsel. Damit besteht die Möglichkeit, dass Störungen und Fehler durch eine Farbänderung in der Anzeige frühzeitig und vor ihrem Wirksamwerden erkannt werden können, sodass vom Bediener oder auch von der Steuerung Gegenmaßnahmen eingeleietet werden können, bevor sich die Fehlfunktionen praktisch auswirken. Das Erfassen und die Anzeige im Vorfeld des Auftretens von Fehlern führen zu verbesserten Betriebsabläufen und zu verringerten Stillstandszeiten der Maschine. Diese Effekte wirken sich nicht nur bei der Zustandsüberwachung einer einzelnen Maschine aus, sondern ihre vorteilhafte Wirkung zeigt sich auch dann, wenn ein einzelner Bediener eine Gruppe von Maschinen bedienen und überwachen muss.

Obwohl eine optische Anzeige in vorzugsweise drei Ampelfarben die Überwachungsfunktion in ausreichendem Maße erfüllt, kann es doch zweckmäßig sein, die optische Anzeige mit einer akustischen Anzeige zu kombinieren, um dadurch den Aufmerksamkeitsfaktor zu erhöhen.

Gemäß einer zweckmäßigen Ausgestalung der Erfindung enthält die Anzeige mehrere Farbbereiche, die wechselweise aktiviert werden, und zwar Grün für Normalbetrieb, Gelb/Orange für kritischen Betrieb und Rot für gefährlichen Betrieb. Dabei sollte das grüne Feld für den Normalbetrieb wesentlich größer als das gelb/orange Feld für den kritischen Betrieb, und dieses wiederum größer als das rote Feld für den gefährlichen Betriebszustand in einem speziellen Anzeigeelement sein. Als besonders zweckmäßig hat sich eine prozentuale Feldgrößenverteilung von 60% Grün, 20% Gelb/Orange und 10% Rot erwiesen. Das große grüne Feld steht für einen normalen Betriebszustand, wobei die relative Größe des grünen Feldes die Ist-Größe des überwachten Betriebsparameters angibt. Beim Einrichten der Maschine kann daher der Bediener die Maschine auf einen Wert einrichten, der nahe der oberen Grenze des Grün-Feldes liegt, d.h. etwas unter 60%. Damit kann der Bediener beispielsweise den Vorschub des Werkzeugs so groß wählen, dass die Stromaufnahme des E-Motors der Arbeitsspindel sich im oberen Bereich des grünen Feldes befindet. Der auf diese Weise optimierte Vorschub führt zu entsprechenden Spanleistungen. Eine ähnliche Vorgehensweise kann beispielsweise durch die Überwachung von Vibrationen an der Werkzeugaufnahme erfolgen.

Das gelb/orange Feld im optischen Anzeigeelement weist den Bediener darauf hin, dass beispielsweise die Stromaufnahme des Spindelmotors oder auch die Vibrationen der Arbeitsspindel oder des Werkzeugs sich im Grenzbereich befinden und in Kürze Maßnahmen eingeleitet werden sollten, um diese Betriebsparameter auf ihre Normalgröße zurückzuführen. Dies kann beispielsweise durch Verringerung des Vorschubs, durch einen Werkzeugwechsel oder auch durch andere Maßnahmen erfolgen. Wesentlich ist, dass der Aufwand und die Sorgfalt zur Überwachung einer Maschine bei der Durchführung unterschiedlichster Einrichtarbeiten sowei auch zur Überwachung einer Mehrzahl von Maschinen für einen Bediener herabgesetzt ist, was sich auf den Dauerbetrieb aller Maschinen vorteilhaft auswirkt.

Zweckmäßig ist die Anzeige als optisches Leuchtelement außen an einer Seitenwand der Bearbeitungseinheit angeordnet, sodass sie sich im unmittelbaren Sichtbereich des Bedieners befindet, wenn dieser den Betrieb eines Werkzeuges an einem Werkstück im Arbeitsbereich der Maschine beobachtet.

Vorzugsweise enthält die Anzeige eine Mehrzahl von Leuchtkörpern, wie LEDs, die in einer Gehäusekapsel mit transparenter Außenwand angeordnet und elektrisch mit der Auswerteeinheit bzw. mit der Steuereinheit verbunden sind. Dabei ist es vorteilhaft, wenn die Anzahl der jeweiligen Leuchtkörper der gemessenen Größe des jeweiligen Parameters proportional ist, sodass dem Bediener durch die Anzahl der jeweils aktivierten Leuchtkörper und damit durch die Größe des jeweiligen Leuchtfeldes auch die Größe und Wertigkeit des jeweils relevanten Betriebsparameters angezeigt werden.

Im Folgenden werden Ausführungsbeispiele der Erfindung anhand der Zeichnung im Einzelnen beschrieben. Es zeigen:
- Fig. 1: eine Universal-Fräsmaschine mit Schwenkkopf in schematischer Seitenansicht,
- Fig. 2: eine Vertikal-Fräsmaschine mit vertikal ausgerichtetem Spindelkopf.

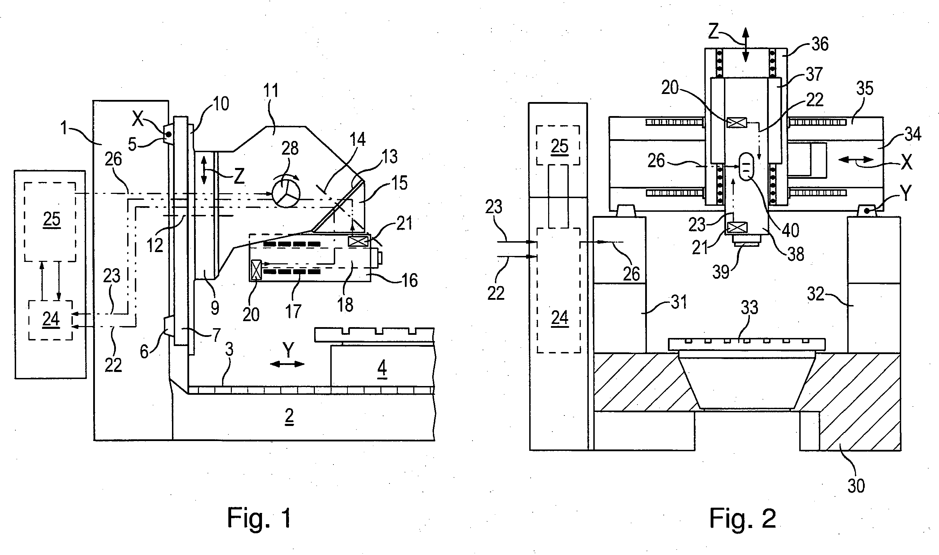

Die in Fig. 1 dargestellte Universal-Fräsmaschine enthält einen rückwärtigen Ständer 1 und ein an dessen unterer Vorderseite angeordnetes Maschinenbett 2, auf dem in Führungsschienen 3 ein Werkstücktisch 4 in Richtung der Y-Koordinatenachse motorisch verfahrbar ist. In horizontalen Führungsschienen 5, 6 an der Vorderseite des Ständers 1 ist ein Horizontalschlitten 7 in Richtung der X-Koordinatenachse motorisch verfahrbar angeordnet, an dessen vorderer Stirnseite ein Querschlitten 9 in vertikalen Führungsschienen 10 in Richtung der Z-Koordinatenachse motorisch verfahrbar geführt ist. An der Stirnseite des Querschlittens 9 ist ein Kopf 11 um die horizontale Achse 12 verdrehbar montiert, an dessen vorderer 45°-Schrägfläche 13 ein um die 45°-Schrägachse 14 motorisch bewegbarer Schwenkkopf 15 gelagert ist. An einer Katheterfläche dieses Schwenkkopfes 15 ist ein Spindelgehäuse 16 befestigt, in dessen linkem Teil ein Spindelmotor 17 und davor eine Arbeitsspindel 18 angeordnet sind - jeweils gestrichelt dargestellt. Am rückwärtigen Ende des Spindelgehäuses 16 ist im hinteren Bereich des Spindelmotors 17 ein Sensor 20 angeordnet, der die Stromaufnahme des Motors 17 kontinuierlich erfasst. Am vorderen Endbereich des Spindelgehäuses 16 befindet sich ein Vibrationssensor 21, der die an der Werkzeugaufnahme bzw. dem eingespannten Werkzeug während der Arbeit auftretenden Vibrationen erfasst. Die beiden Sensoren 20 und 21 bilden eine Sensorik, die über Datenleitungen 22, 23 mit einer Auswerteeinheit 24 verbunden sind, die an eine herkömmliche Steuereinheit 25 angeschlossen ist. Von der Steuereinheit 25 führt eine Datenleitung 26 zu einer Anzeige 28, die als drehfestes kreisrundes Leuchtelement in einer Seitenwand des Tragkopfes 11 in einer ergonomisch günstigenPosition angeordnet ist, sodass sie sich im unmittelbaren Sichtbereich eines seitlich neben der Maschine stehenden Bedieners befindet. Dieses Anzeigeelement 28 enthält eine transparente Gehäusekapsel, in der eine Mehrzahl von Leuchtkörpern, wie LEDs, angeordnet ist. Das Anzeigeelement 28 ist ferner in drei Felder unterteilt, und zwar in ein größeres grünfarbiges Feld, das 60 % der Leuchtfläche einnimmt, ein mittelgroßes gelb/oranges Feld, das 20 % der Leuchtfläche einnimmt, und ein kleineres rotes Feld, das 20 % der Leuchtfläche einnimmt. Je nach den von der Sensorik 20, 21 ermittelten Messwerten und dem in der Auswerteeinheit 24 festgestellten Betriebszustand werden mehr oder weniger Reihen von LEDs als grünes, gelbes/oranges oder als rotes Feld sichtbar. Das grüne Feld kennzeichnet den normalen Betriebszustand, das gelb/orange Feld einen beginnenden kritischen Betriebszustand und das rote Feld einen gefährlichen Betriebszustand der Werkzeugmaschine, jeweils entsprechend der Größe der erfassten Stromaufnahme- und/oder Vibrationsparameter. Zur Überwachung weiterer Zustände und Eigenschaften der Werkzeugmaschine können auch weitere Betriebsparameter, wie beispielsweise Temperaturen besonders beanspruchter Bauteile od. dgl., durch entsprechende Sensoren erfasst und über die Auswerteeinheit in die Überwachung einbezogen werden.

Die in Fig. 2 in Vorderansicht schematisch dargestellte Fräs- und Bohrmaschine enthält einen Unterbau 30 mit darauf befestigten Seitenwänden 31, 32 und einem zwischen diesen beiden Seitenwänden angeordneten Werkstücktisch 33. In zwei auf der Oberseite der Seitenwände 31, 32 montierten Führungsschienen ist eine Quertraverse 35 in Richtung der Y-Koordinatenachse motorisch verfahrbar montiert, an deren Vorderseite ein Querschlitten 36 und an dessen vorderer Stirnseite ein Vertikalschlitten 37 jeweils in Führungsschienen motorisch verfahrbar angeordnet sind. Zum Antrieb der Schlitten dienen hier elektrische Linearmotoren z.B. 37. Der in Richtung der Z-Koordinatenachse verfahrbare Vertikalschlitten bildet den Träger eines vertikalen Fräskopfes 38, in dessen Gehäuse eine Arbeitsspindel und deren Antriebsmotor gelagert sind.

Zum Erfassen der im spanenden Betrieb auftretenden Schwingungen an der Werkzeugaufnahme 39 bzw. dem darin eingespannten Werkzeug ist auch bei dieser Ausführung ein Sensor 21 im vorderen Bereich des Spindelgehäuses 38 vorgesehen, der über die Datenleitung 22 mit einer Auswerteeinheit 24 verbunden ist. In gleicher Weise wie bei der Ausführung nach Fig. 1 ist im Endbereich des Spindel-Antriebsmotors im Spindelgehäuse 38 ein weiterer Sensor 20 angeordnet, der die Stromaufnahme des elektrischen Antriebsmotors erfasst und über die Datenleitung 23 mit der Auswerteeinheit 24 verbunden ist. Von dieser Auswerteeinheit 24 führt eine Datenleitung 26 zu einem Anzeigenelement 40, das hinsichtlich seiner Funktion dem Anzeigenelement 28 gemäß Fig. 1 entspricht, hier jedoch eine oval langgestreckte Form hat. Auch dieses Anzeigenelement 40 enthält mehrere farbige Felder bzw. Bereiche, die je nach der Größe des kontinuierlich erfassten Betriebsparameters in einer spezifischen Farbe aufleuchten und dadurch dem Bediener den jeweiligen Betriebszustand der Werkzeugmaschine anzeigen. Dabei kann die Anzeige nur eines einzigen Parameters, beispielsweise der gemessenen Vibrationen oder der Stromaufnahme des Spindelmotors, erfolgen, und zwar je nach Einstellung durch den Bediener über Tasten oder Schalter, die entweder in dem Steuerpult der Steuereinheit oder aber in oder an der Auswerteeinheit vorgesehen sein können.

Die erfindungsgemäße Anzeige enthält zweckmäßig eine Skalierung z.B. in Form einer Strichskala für eine prozentuale Feldgrößenverteilung. Bevorzugt wird eine Skalierung auf der Basis einer wechselnden Anzahl an aktivierten Leuchtelementen, d.h. LEDs, in Anpassung an die Größe und/oder Wertigkeit des gemessenen Betriebsparameters.

Ein Verfahren zum Einrichten der Werkzeugmaschine für die Bearbeitung eines bestimmten Werkstücks zeichnet sich dadurch aus, dass der Bediener während der Vornahme der Einrichtarbeiten - im simultanen oder im tatsächlichen Betrieb - die Schnittstelle Werkzeug/Werkstück im Arbeitsbereich der Maschine visuell beobachtet. Zur Optimierung der Arbeitsabläufe und -ergebnisse kann der Bediener Betriebsparameter auf der Tastatur, z.B. Spindelvorschub, Spindeldrehzahl u.dgl. so einstellen, dass sich die ständig beobachtete Anzeige im oberen Bereich des gründen Feldes befindet.

Die Erfindung ist nicht auf die dargestellten und vorstehend beschriebenen Ausführungsbeispiele beschränkt. So können Sensoren zum Erfassen einer Vielzahl unterschiedlicher Betriebsparameter vorgesehen und mit der Auswerteeinheit bzw. auch direkt mit der Steuereinheit verbunden sein. Die Messwerte der einzelnen Sensoren können je nach Priorität des jeweiligen Betriebsparameters über die Auswerteeinheit gesondert in dem Anzeigeelement angezeigt werden. Es besteht auch die Möglichkeit, dass die Auswerteeinheit die Messwerte der verschiedenen Betriebsparameter miteinander verknüpft und Daten aus einer Kombination dieser Messwerte der Anzeigeeinheit zuführt. So können beispielsweise die Lagertemperaturen der Arbeitsspindel, die Stromaufnahme des Spindelmotors und die Vibrationen der Werkzeugaufnahme einzeln gemessen und einzeln - ggf. in wechselnder Folge - als Parameter angezeigt werden. Die drei - oder mehr - Parameter können in der Auswerteeinheit auch zu einem gemeinsamen Datensatz verarbeitet werden, der angezeigt wird und den Betriebszustand der Maschine bei kombinierter Wertung der Parameter angibt.

## Patentansprüche

1. Programmgesteuerte Fräs- und Bohrmaschine, mit
- einer in mehreren Koordinatenachsen motorisch verfahrbaren Bearbeitungseinheit, in der eine Arbeitsspindel (18) zur auswechselbaren Aufnahme eines Spanwerkzeugs sowie ein E-Motor (17) als Antrieb der Arbeitsspindel (18) eingebaut sind,
- einer programmierbaren Steuereinheit (25) und
- einer Einrichtung zur Überwachung des Betriebszustands der Werkzeugmaschine, die aufweist
- mindestens eine Sensorik (20, 21) zum Erfassen mindestens eines Betriebsparameters an einem für diesen Parameter relevanten Bauteil (11, 38) der Werkzeugmaschine,
- eine mit der Sensorik (20, 21) und auch mit der Steuereinheit (25) verbundene Auswerteeinheit (24), welche die von der Sensorik (20, 21) erfassten Messwerte verarbeitet, und
- eine optische Anzeige (28, 40), die entsprechend den Daten aus der Auswerteeinheit (24) einen normalen, einen kritischen und einen gefährlichen Betriebszustand der Werkzeugmaschine anzeigt, wobei
- die optische Anzeige ein Anzeigeelement (28, 40) enthält,
- das Anzeigeelement (28, 40) je nach Betriebszustand wechselnde Farbbereiche enthält, grün für normalen Betriebszustand, gelb/orange für kritischen Betriebszustand, und rot für gefährlichen Betriebszustand
**dadurch gekennzeichnet, dass**
- das Anzeigeelement (28, 40) in ergonomisch günstiger Position im direkten Sichtbereich des Bedieners außen an einer Seitenwand der Bearbeitungseinheit angeordnet ist,
- das Anzeigeelement (28, 40) eine Mehrzahl von Leuchtkörpern enthält, die in einer transparenten Gehäusekapsel angeordnet und elektrisch mit der Auswerteeinheit (24) bzw. mit der Steuereinheit (25) verbunden sind, und
- wobei von der gesamten Farbfläche des Anzeigeelements (28, 40) der grüne Bereich etwa 60 bis 70 %, der gelb/orange Bereich 20 bis 30 % und der rote Bereich 10 bis 20 % einnimmt, und
- wobei die relative Größe des jeweils aktiven Farbbereichs die Ist-Größe des überwachten Betriebsparameters angibt.

2. Werkzeugmaschine nach Anspruch 1,
**dadurch gekennzeichnet, dass**
die Auswerteeinheit (24) mit der Steuereinheit (25) funktional verknüpft ist und aus den Messdaten der Sensorik (20, 21) sowie aus Daten der Steuereinheit (25) die jeweilige Zustandsgröße des überwachten Betriebsparameters bestimmt und die der Zustandsgröße entsprechende Farbe im Anzeigeelement (28, 40) aktiviert.

3. Werkzeugmaschine nach einem der vorstehenden Ansprüche,
**dadurch gekennzeichnet, dass**
das Anzeigeelement (28, 40) eine Skalierung enthält, die den Größenanteil des jeweils farbig aktiven Bereichs angibt.

4. Werkzeugmaschine nach einem der vorstehenden Ansprüche,
**dadurch gekennzeichnet, dass**
das Anzeigeelement (28) als drehfestes, kreisrundes Leuchtelement ausgebildet ist.

5. Werzeugmaschine nach einem der vorstehenden Ansprüche,
**dadurch gekennzeichnet, dass**
die Sensorik (20, 21) einen Vibrationssensor (21) enthält, der die an der Werkzeugaufnahme im Arbeitsbetrieb auftretenden Vibrationen erfasst und der über eine Datenleitung (23) mit der Auswerteeinheit (24) verbunden ist.

6. Werkzeugmaschine nach einem der vorstehenden Ansprüche,
**dadurch gekennzeichnet, dass**
die Sensorik (20, 21) einen im hinteren Bereich des Spindelmotors (17) angeordneten Sensor (20) enthält, der die Stromaufnahme des Spindelmotors kontinuierlich erfasst und der über eine Datenleitung (22) mit der Auswerteeinheit (24) verbunden ist.

## Claims

1. A program-controlled milling and drilling machine, comprising
- a processing unit which is movable in a plurality of coordinate axes by means of a motor and in which a work spindle (18) for the exchangeable accommodation of a cutting tool and an e-motor (17) as a drive for the work spindle (18) are installed,
- a programmable control unit (25) and
- a device for monitoring the operating condition of the machine tool which includes
- at least one sensor system (20, 21) for detecting at least one operating parameter at a component (11, 38) of the machine tool, said component being relevant for this parameter,
- an evaluating unit (24) which is connected to the sensor system (20, 21) and also to the control unit (25) and which processes the measured values detected by the sensor system (20, 21), and
- an optical display (28, 40) which according to the data from the evaluating unit (24) indicates a normal operating condition, a critical operating condition and a dangerous operating condition for the machine tool, wherein
- the optical display contains a display element (28,40),
- the display element (28, 40) contains, depending on the operating condition, changing color ranges, i.e. green for the normal operating condition, yellow/orange for the critical operating condition and red for the dangerous operating condition, **characterized in that**
- the display element (28, 40) is arranged in an ergonomically advantageous position in the direct viewing area of an operator externally on a side wall of the processing unit,
- the display element (28, 40) contains a plurality of light fixtures which are arranged in a transparent housing capsule and are electrically connected to the evaluating unit (24) and/or to the control unit (25), and
- wherein, of the entire color area of the display element (28, 40), the green area adopts about 60 to 70 %, the yellow/orange area 20 to 30 % and the red area 10 to 20 %, and
- wherein the relative size of the respectively active color range indicates the actual size of the monitored operating parameter.

2. The machine tool according to claim 1,
**characterized in that**
the evaluating unit (24) is functionally linked to the control unit (25) and determines the respective state variable of the monitored operating parameter from the measured data of the sensor system (20, 21) and from the data of the control unit (25) and activates the color corresponding to the state variable in the display element (28, 40).

3. The machine tool according to any of the preceding claims,
**characterized in that**
the display element (28, 40) contains a scale which indicates the fraction of the respectively colored active area.

4. The machine tool according to any of the preceding claims,
**characterized in that**
the display element (28) is made as a rotationally fixed, circular light element.

5. The machine tool according to any of the preceding claims,
**characterized in that**
the sensor system (20, 21) contains a vibration sensor (21) which detects the vibrations occurring on the tool support in the operating mode and which is connected to the evaluating unit (24) via a data line (23).

6. The machine tool according to any of the preceding claims,
**characterized in that**
the sensor system (20, 21) contains a sensor (20) arranged in the rear area of the spindle motor (17), said sensor continuously detecting the current draw of the spindle motor and being connected to the evaluating unit (24) via a data line (22).

## Revendications

1. Fraiseuse-aléseuse commandée par programme, comportant
- une unité d'usinage déplaçable de manière motorisée sur plusieurs axes des coordonnées, intégrant une broche de travail (18) permettant d'accueillir un outil de serrage interchangable ainsi qu'un moteur électrique (17) entraînant la broche de travail (18),
- une unité de commande programmable (25) et
- un dispositif de surveillance de l'état de service de la machine-outil, comprenant
- au moins un système de capteurs (20, 21) destiné à détecter au moins un paramètre de service sur un élément de la machine-outil pertinent pour ce paramètre (11, 38),
- une unité d'interprétation (24) reliée au système de capteurs (20, 21) et également à l'unité de commande (25), chargée de traiter les valeurs mesurées par le système de capteurs (20, 21), et
- un affichage optique (28, 40) qui, selon les données fournies par l'unité d'interprétation (24), indique un état de service de la machine-outil soit normal, soit critique, soit dangereux ; ledit affichage optique comprenant un élément d'affichage (28, 40) comportant des zones de couleur changeant selon l'état de service, à savoir vert pour l'état de service normal, jaune/orange pour l'état de service critique, et rouge pour l'état de service dangereux,
**caractérisée en ce que**
- l'élément d'affichage (28, 40) est placé de manière ergonomique, directement dans le champ de vision de l'utilisateur, sur une paroi latérale extérieure de l'unité d'usinage,
- l'élément d'affichage (28, 40) se compose d'une pluralité de corps lumineux agencés dans une capsule de boîtier transparente et reliés électriquement à l'unité d'interprétation (24) ou à l'unité de commande (25),
- la zone verte représentant environ 60 à 70 % de la surface de couleur totale, la zone jaune/orange environ 20 à 30 % et la zone rouge environ 10 à 20 %, et
- la taille relative de la zone de couleur correspondante active indiquant la valeur réelle du paramètre de service surveillé.

2. Machine-outil selon la revendication 1,
**caractérisée en ce que**
l'unité d'interprétation (24) est reliée à l'unité de commande (25) de manière fonctionnelle, détermine à partir des données mesurées par le système de capteurs (20, 21) ainsi qu'à partir des données de l'unité de commande (25) la valeur de service correspondante pour le paramètre de service à surveiller, et active la couleur correspondant à la valeur réelle sur l'élément d'affichage (28, 40).

3. Machine-outil selon l'une quelconque des revendications précédentes,
**caractérisée en ce que**
l'élément d'affichage (28, 40) comporte une échelle indiquant la proportion de la zone de couleur active correspondante.

4. Machine-outil selon l'une quelconque des revendications précédentes,
**caractérisée en ce que**
l'élément d'affichage (28) est représenté comme un élément lumineux circulaire, bloqué en rotation.

5. Machine-outil selon l'une quelconque des revendications précédentes,
**caractérisée en ce que**
le système de capteurs (20, 21) contient un capteur de vibrations (21) qui détecte les vibrations survenant au niveau du logement à outil en fonctionnement et qui est relié à l'unité de commande (25) par un câble de données (23).

6. Machine-outil selon l'une quelconque des revendications précédentes,
**caractérisée en ce que**
le système de capteurs (20, 21) contient un capteur placé à l'arrière du moteur de broche (17), qui détecte en continu la puissance consommée du moteur de broche et qui est relié à l'unité d'interprétation (24) par un câble de données (22).
